# EUROPÄISCHE PATENTSCHRIFT

(11) **EP 1 012 591 B1**
(45) Veröffentlichungstag und Bekanntmachung des Hinweises auf die Patenterteilung: **04.02.2004**
(21) Anmeldenummer: 98952546.4
(22) Anmeldetag: 04.09.1998
(51) Int. Cl.: G01N 27/407

(54) **MESSFÜHLER**
MEASURING PROBE
SONDE DE MESURE

(30) Priorität: 09.09.1997 DE 19739435
(43) Veröffentlichungstag der Anmeldung: 28.06.2000
(73) Patentinhaber: ROBERT BOSCH GMBH, 70442 Stuttgart (DE)
(72) Erfinder: GRASER, Theodor, D-70435 Stuttgart (DE); HOETZEL, Gerhard, D-70376 Stuttgart (DE); WEHRMANN, Johann, D-70184 Stuttgart (DE); EISENSCHMID, Heinz, D-70499 Stuttgart (DE)
(86) Internationale Anmeldenummer: PCT/DE1998/002609
(87) Internationale Veröffentlichungsnummer: WO 1999/013324

(56) Entgegenhaltungen:
- EP-A- 0 624 791
- US-A- 4 956 072
- PATENT ABSTRACTS OF JAPAN vol. 13, no. 73 (P-830), 20. Februar 1989 & JP 63 259453 A (NGK SPARK PLUG CO LTD)

## Beschreibung

### Stand der Technik

Die Erfindung betrifft einen Meßfühler, insbesondere zur Bestimmung des Sauerstoffgehaltes in Abgasen von Verbrennungsmotoren, nach dem Oberbegriff des Anspruchs 1.

Aus der EP A1 624 791 (US 5 329 806) ist ein Gassensor bekannt, bei dem in einem rohrförmigen, metallischen Gehäuse ein Sensorelement gasdicht fixiert ist. Das rohrförmige Gehäuse hat am unteren Teil eine radial nach außen weisende Lippe, die einen Dichtflansch bildet. Der Gassensor wird in eine Öffnung einer Abgasanlage eingesetzt, wobei die Lippe auf einen in der Öffnung ausgebildeten Dichtsitz aufsitzt. Über das Gehäuse ist eine Hohlschraube geführt, die in ein in der Öffnung angeordnetes Gewinde eingeschraubt wird und dabei die Lippe gasdicht mit der Abgasanlage verbindet. Problematisch bei dieser Ausführung ist jedoch, daß durch das Presen bzw. Stauchen des relativ dünnwandigen Materials des Gehäuses Mikrorisse an der Lippe auftreten können, die zur Undichtheit des Gehäuses führen.

Aus der JP 63259453 A1 ist ein Gasmessfühler mit einem Gehäuse bekannt, dass einen Dichtfllansch ausbildet, der zwei geneigt verlaufenden Dichtflächen aufweist. Der Bereich zwischen den Dichtflächen ist vollständig mit dem Material des Gehäuses ausgefüllt.

### Vorteile der Erfindung

Die Erfindung mit den kennzeichnenden Merkmalen des Hauptanspruchs hat demgegenüber den Vorteil, daß der Dichtflansch absolut gasdicht ist und die geneigt verlaufenden Dichtflächen einen absolut gasdichten Dichtsitz am Abgasrohr realisieren. Die hohle Ausbildung des Dichtflanschs bewirkt darüberhinaus einen Federeffekt, der die Dichtwirkung ebenfalls unterstützt.

Durch die in den Unteransprüchen aufgeführten Maßnahmen sind vorteilhafte Weiterbildungen und Verbesserungen des im Anspruch 1 angegebenen Meßfühlern möglich. Die Ausbildung der geneigt verlaufenden Dichtflächen in einem Winkel zwischen 10° bis 30°, vorzugsweise von 20°,ist besonders vorteilhaft. Die Anordnung des Dichtflanschs meßgasseitig hinter der Dichtungsanordnung für das Sensorelement wirkt sich vorteilhaft auf die Montage des Meßfühlers aus. Dadurch kann das Sensorelement zunächst mit den Keramikteilen der Dichtungsanordnung bestückt werden. Das Gehäuse wird dann über das mit der Dichtungsanordnung bestückte Sensorelement gestülpt. Zweckmäßig ist ferner, am Abgasrohr ein Anschlußstück anzubringen, das an der Stirnfläche einen Dichtsitz für den Dichtflansch ausbildet.

### Zeichnung

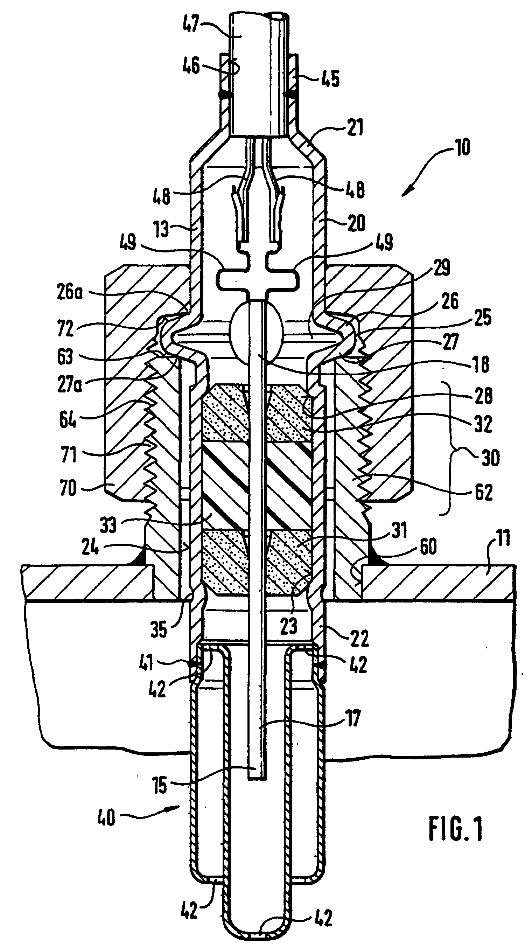

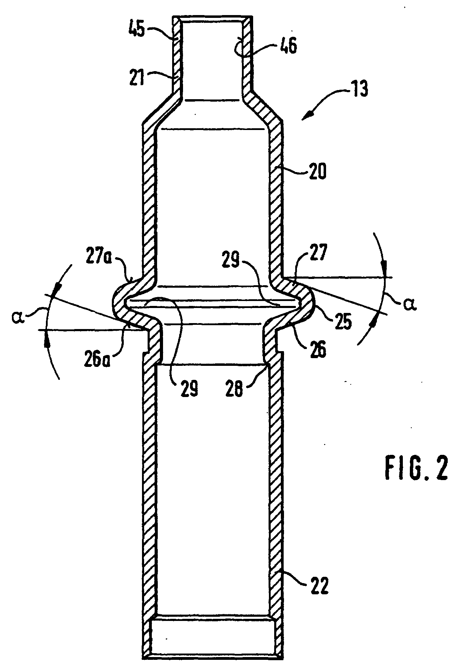

Ein Ausführungsbeispiel der Erfindung ist in der Zeichnung dargestellt und in der nachfolgenden Beschreibung näher erläutert. Figur 1 zeigt einen Längsschnitt durch einen in ein Abgasrohr eingesetzten Meßfühler und Figur 2 einen detaillierten Längsschnitt durch das Gehäuse des Meßfühlers gemäß Figur 1.

### Ausführungsbeispiel

Ein Meßfühler 10, beispielsweise ein elektrochemischer Sauerstoffsensor, ist in ein Abgasrohr 11 eingesetzt und hat ein metallisches Gehäuse 13, in dem ein planares Sensorelement 15 mit einem meßgasseitigen Abschnitt 17 und einem anschlußseitigen Abschnitt 18 angeordnet ist.

Das Gehäuse 13 ist ein beidseitig offenes Rohrelement 20 mit einem anschlußseitigen Endabschnitt 21 und einem meßgasseitigen Endabschnitt 22 sowie mit einer inneren Wand 23 und einer äußeren Wand 24. Das Rohrelement 20 weist ferner einen radial umlaufenden Dichtflansch 25 mit einem oberen Ringelement 26 mit einer oberen, nach unten geneigt verlaufenden Dichtfläche 26a und mit einem unteren Ringelement 27 mit einer unteren, nach oben geneigt verlaufenden Dichtfläche 27a auf. Die beiden Dichtflächen 26a und 27a verlaufen mit einem Winkel α von beispielsweise 20° bezogen auf eine rechtwinklig zur Mittellinie des Rohrelements 20 verlaufenden Ebene (Figur 2). Der Dichtflansch 25 mit den aufeinanderzuverlaufenden Ringelementen 26, 27 ist so ausgebildet, daß sich innerhalb des Gehäuses 13 zwischen den Ringelementen 26, 27 ein Hohlraum 29 ausgebildet. Dadurch können die beiden Ringelemente 26, 27 als federnde Schenkel wirken, wodurch die Dichtwirkung der Dichtflächen 26a, 27a verstärkt wird. Meßgasseitig vor dem Dichtflansch 25 ist an der inneren Wand 23 eine Ringfläche 28 angeformt, die eine Anschlagfläche für eine später beschriebene Dichtungsanordnung 30 bildet. Durch diese Ausbildung liegt der Dichtflansch 25 meßgasseitig hinter der Dichtungsanordnung 30 und damit relativ weit vom Abgasrohr 11 entfernt.

Zur Ausbildung des Dichtflansches 25 wird das Rohrelement 20 beispielsweise zunächst gestaucht, wobei sich hierbei eine gerundete Wulst am Rohrelement 20 ausbildet. Diese Wulst wird danach beispielsweise durch das Fertigungsverfahren Rundkneten derart bearbeitet, daß sich die beiden geneigt verlaufenden Dichtflächen 26a, 27a ausbilden. Es sind aber auch andere Fertigungsverfahren denkbar, mit denen der Dichtflansch 25 rationell herstellbar ist, beispielsweise mittels Ziehen und anschließendem Stauchen.

Die im Gehäuse 13 angeordnete Dichtungsanordnung 30 besteht beispielsweise aus einem meßgasseitigen Keramikformteil 31, einem anschlußseitigen Keramikformteil 32 und einem dazwischen angeordneten Dichtelement 33. Die Keramikformteile 31 und 32 bestehen beispielsweise aus Al₂O₃ und weisen jeweils nicht näher bezeichnete Durchführungen für das Sensorelement 15 auf. Das Dichtelement 33 besteht beispielsweise aus Steatit und wird in einem vorgepreßten Zustand mit ebenfalls einer Durchführung für das Sensorelement 15 eingesetzt. Auf die Dichtungsanordnung 30 wird zunächst das Gehäuse 13 geschoben, bis die Ringfläche 28 am anschlußseitigen Keramikformteil 32 anschlägt. Danach wird meßgasseitig mit einem Stempel auf das meßgasseitige Keramikformteil 31 mit einer Anpreßkraft eingewirkt, die derart bemessen ist, daß das vorgepreßte Dichtelement 33 zerquetscht wird, so daß sich die Pulverbestandteile sowohl an das Sensorelement 15 als auch an die innere Wand 23 andrücken. Während der Krafteinwirkung auf das meßgasseitige Keramikformteil 31 wird eine radial verlaufende und nach innen weisende Einformung 35 am meßgasseitigen Endabschnitt 22 das Rohrelement 20 eingebracht. Dadurch wird das meßgasseitige Keramikformteil 31 in der Druckposition bezüglich des Dichtelements 33 gehalten

Am meßgasseitigen Endabschitt 22 ragt das Sensorelement 15 aus dem Gehäuse 13 heraus und ist dort beispielsweise von einem Doppelschutzrohr 40 umgeben. Das Doppelschutzrohr 40 ist in den meßgaseitigen Endabschitt 22 eingesetzt und dort mittels einer umlaufenden Schweißnaht 41 mit dem Gehäuse 13 verbunden. Das Doppelschutzrohr 40 hat Gasein- und Gasaustrittsöffnungen 42 für das Abgas/Meßgas. Im vorliegenden Ausführungsbeispiel ist das Doppelschutzrohr 40 aus einem Stück geformt.

Der anschlußseitige Endabschnitt 21 des Gehäuses 13 hat einen sich verjüngenden Abschnitt 45 mit einer Öffnung 46. In die Öffnung 46 ist beispielsweise ein metallisches Mantelrohr 47 eingeschweißt. Im Mantelrohr 47 sind Anschlußkabel 48 für das Sensorelement 15 geführt. Die Anschlußkabel 48 sind mit Kontaktierstücken 49 verbunden, die mit nicht näher dargestellten, am anschlußseitigen Abschnitt 18 des Sensorelements 15 angeordneten Anschlußkontakten kontaktiert sind. Das Kontaktieren des Sensorelements 15 kann beispielsweise durch Klemmen oder durch eine stoffschlüssige Verbindung realisiert werden. Der Kabelausgang durch die Öffnung 46 kann jedoch auch mittels einer temperaturbeständigen PTFE-Kabeldurchführung realisiert werden.

Zur Befestigung des Meßfühlers 10 im Abgasrohr 11 ist im Abgasrohr 11 eine Öffnung 60 vorgesehen, in die ein zylindrisches Anschlußstück 62 mit einer ebenen Ringfläche 63 und einem Gewindeabschnitt 64 eingeschweißt ist. Auf der Ringfläche 63 liegt die untere Dichtfläche 27a des Dichtflansches 25 auf. Über das Gehäuse 13 ist eine Überwurfmutter 70 mit einem Innengewinde 71 und einer inneren Ringfläche 72 geführt. Die Überwurfmutter 70 wird auf das Anschlußstück 62 geschraubt. Dadurch wird der Dichtflansch 25 auf die Ringfläche 63 gepreßt. Die Ringfläche 63 bildet somit einen Dichtsitz für den Dichtflansch 60.

Zur Befestigung des Meßfühlers 10 im Abgasrohr 11 sind jedoch auch andere Formen von Befestigungsmitteln möglich. Beispielsweise die Befestigung mittels einer Hohlschraube, die am Außenumfang ein Gewinde aufweist, das in ein am Anschlußstück 62 angeordnetes Innengewinde eingeschraubt wird, wobei der Dichtsitz für den Dichtflansch 25 durch eine zusätzliche Ringfläche im Inneren des Anschlußstücks 62 ausgeführt sein muß. Es ist auch denkbar, zwischen Anschlußstück 62 und der Hohlschraube einen Adapter zwischenzuschalten, wobei dann der Meßfühler 10 auf einer Ringfläche des Adapters mit dem Dichtflansch 25 aufsitzt und der Adapter mit einer weiteren Ringfläche auf der Ringfläche des Anschlußstücks 62 aufliegt.

## Patentansprüche

1. Meßfühler, insbesondere zur Bestimmung des Sauerstoffgehaltes in Abgasen von Verbrennungsmotoren, mit einem in einem Gehäuse fixierten Sensorelement, mit einem aus dem Material des Gehäuses geformten Dichtflansch, der in einer Einbauposition auf einem Dichtsitz aufliegt, und mit einem Befestigungselement, mit dem das Gehäuse in einem Abgasrohr befestigt wird, wobei der Dichtflansch (25) zwei aus dem Gehäuse (13) geformte Ringelemente (26, 27) mit jeweils einer geneigt verlaufenden Dichtfläche (26a, 27b) aufweist, **dadurch gekennzeichnet, daß** zwischen den beiden Ringelementen (26, 27) innerhalb des Gehäuses (13) ein Hohlraum (29) ausgebildet ist.

2. Meßfühler nach Anspruch 1, **dadurch gekennzeichnet, daß** die Dichtflächen (26a, 27a) in einem Winkel α von 10° bis 30°, vorzugsweise von 20°, bezogen zu einer rechtwinklig zur Mittellinie des rohrförmigen Gehäuses (13) verlaufenden Ebene geneigt sind.

3. Meßfühler nach Anspruch 1 oder 2, **dadurch gekennzeichnet, daß** im Gehäuse (13) eine Dichtungsanordnung (30) für das Sensorelement (13) angeordnet ist und daß der Dichtflansch (25) meßgasseitig hinter der Dichtungsanordnung (30) angeordnet ist.

4. Meßfühler nach Anspruch 3, **dadurch gekennzeichnet, daß** im Gehäuse (13) eine meßgasferne und eine meßgasnahe Ringfläche (28, 35) ausgebildet sind, zwischen denen die Dichtungsanordnung (30) verpreßt ist.

5. Meßfühler nach einem der vorhergehenden Ansprüche, **dadurch gekennzeichnet, daß** ein Anschlußstück (62) vorgesehen ist, das eine im Abgasrohr (11) angeordnete Öffnung (60) gasdicht umschließt, und daß am Anschlußstück (62) ein Dichtsitz (63) für den Dichtflansch (25) ausgebildet ist.

## Claims

1. Measuring probe, in particular for determining the oxygen content in exhaust gases from internal combustion engines, having a sensor element fixed in a housing, having a sealing flange which is shaped out of the material of the housing and in an installed position bears against a sealing seat, and having a securing element, by means of which the housing is secured in an exhaust pipe, the sealing flange (25) having two ring elements (26, 27) which are shaped out of the housing (13) and each have an inclined sealing surface (26a, 27b), **characterized in that** a cavity (29) is formed inside the housing (13) between the two ring elements (26, 27).

2. Measuring probe according to Claim 1, **characterized in that** the sealing surfaces (26a, 27a) are inclined at an angle α of 10° to 30°, preferably of 20°, with respect to a plane which runs at right angles to the centre axis of the tubular housing (13).

3. Measuring probe according to Claim 1 or 2, **characterized in that** a seal arrangement (30) for the sensor element (13) is arranged in the housing (13), and **in that** the sealing flange (25), on the measuring gas side, is arranged behind the seal arrangement (30).

4. Measuring probe according to Claim 3, **characterized in that** a ring surface (28) which is remote from the measuring gas and a ring surface (35) which is close to the measuring gas are formed in the housing (13) and the seal arrangement (30) is pressed in between them.

5. Measuring probe according to one of the preceding claims, **characterized in that** there is a connection piece (62) which surrounds an opening (60) arranged in the exhaust pipe (11) in a gastight manner, and **in that** a sealing seat (63) for the sealing flange (25) is formed at the connection piece (62).

## Revendications

1. Capteur de mesure notamment pour déterminer la teneur en oxygène des gaz d'échappement de moteurs à combustion interne comportant un élément de capteur fixé dans un boîtier, une bride d'étanchéité formée dans la matière du boîtier et qui s'appuie en position de montage contre un siège d'étanchéité ainsi qu'un élément de fixation par lequel le boîtier est fixé dans une conduite de gaz d'échappement ;
la bride d'étanchéité (25) étant formée de deux éléments annulaires (26, 27) réalisés dans le boîtier (13) ayant chaque fois une surface d'étanchéité (26a, 27b) inclinée,
**caractérisé par**
une cavité (29) réalisée dans le boîtier (13) entre les deux éléments annulaires (26, 27).

2. Capteur de mesure selon la revendication 1,
**caractérisé en ce que**
les surfaces d'étanchéité (26a, 27a) sont inclinées d'un angle (α) de 10° à 30° de préférence de 20° par rapport à un plan perpendiculaire à l'axe du boîtier tubulaire (13).

3. Capteur de mesure selon la revendication 1 ou 2,
**caractérisé par**
un dispositif de joints (30) pour l'élément de capteur (15) dans le boîtier (13) et la bride d'étanchéité (25) est située du côté du gaz à mesurer en aval du dispositif d'étanchéité (30).

4. Capteur de mesure selon la revendication 3,
**caractérisé par**
une surface annulaire (28, 35) éloignée du gaz à mesurer et une surface proche du gaz à mesurer dans le boîtier (13) et entre ces deux surfaces, un dispositif d'étanchéité (30).

5. Capteur de mesure selon l'une des revendications précédentes,
**caractérisé par**
une pièce de branchement (62) qui entoure de manière étanche au gaz une ouverture (60) réalisée dans la conduite de gaz d'échappement (11) et la pièce de branchement (62) comporte un siège d'étanchéité (63) pour la bride d'étanchéité (25).
